# EUROPÄISCHE PATENTSCHRIFT

(11) **EP 3 378 743 B1**
(45) Veröffentlichungstag und Bekanntmachung des Hinweises auf die Patenterteilung: **14.08.2019**
(21) Anmeldenummer: 18161407.4
(22) Anmeldetag: 13.03.2018
(51) Int. Cl.: B62J 1/16, A47C 7/62, B62J 11/00

(54) **FAHRRADKINDERSITZ MIT INTEGRIERTEM GETRÄNKEHALTER**
CHILD BICYCLE SEAT WITH INTEGRATED DRINKS HOLDER
SIÈGE D'ENFANT DE BICYCLETTE DOTÉ DE SUPPORT DE BOISSON INTÉGRÉ

(30) Priorität: 22.03.2017 DE 102017106144
(43) Veröffentlichungstag der Anmeldung: 26.09.2018
(73) Patentinhaber: Kettler Alu-Rad GmbH, 50739 Köln (DE)
(72) Erfinder: Fiegl, Thomas, 64367 Mühltal (DE); Pohl, Achim, 64342 Seeheim-Jugenheim (DE)
(74) Vertreter: WSL Patentanwälte Partnerschaft mbB

(56) Entgegenhaltungen:
- EP-A1- 1 604 890
- EP-A1- 1 759 968
- EP-A1- 2 474 441
- WO-A1-2016/196768
- DE-A1-102012 108 136
- GB-A- 2 504 743
- JP-A- 2016 130 050
- US-A- 5 752 687
- US-A1- 2006 119 145
- US-A1- 2006 289 713

## Beschreibung

Die vorliegende Erfindung betrifft einen Fahrradkindersitz für eine Gepäckträger- oder Rahmenmontage mit einer Sitzschale, zwei Fußstützen und mit einer die zwei Fußstützen und die Sitzschale verbindenden Mittelkonsole. Ein Fahrradkindersitz nach dem Oberbegriff des Anspruchs 1 ist aus DE 10 2010 108 136 bekannt.

Fahrradkindersitze für eine Gepäckträger- oder Rahmenmontage werden derart mit einem Fahrrad verbunden, dass die Sitzschale über dem Hinterrad oder über dem Vorderrad des Fahrrads angeordnet ist. Die Fußstützen des Fahrradkindersitzes befinden sich seitlich auf gegenüberliegenden Seiten des Vorder- bzw. Hinterrads. Die Mittelkonsole verbindet die zwei Fußstützen und die Sitzschale und erstreckt sich entsprechend von einer der Fußstützen zu der jeweils anderen Fußstütze. Die Mittelkonsole ist daher ebenfalls über dem Vorder- bzw. Hinterrad des Fahrrads angeordnet. Ist der Fahrradkindersitze über dem Hinterrad angeordnet, befindet sich der Fahrradkindersitz in Fahrtrichtung hinter dem Fahrer des Fahrrads. Bekommt das Kind in dem Kindersitz während der Fahrt Durst, ist der Fahrer gezwungen, die Fahrt zu unterbrechen und dem Kind ein Getränk zu reichen. Die Fahrt verzögert sich. Behält das Kind das Getränk, geht dieses im Verlauf der Weiterfahrt häufig verloren.

Eine Aufgabe der vorliegenden Erfindung ist es daher, einen Fahrradkindersitz bereitzustellen mit dem die Versorgung eines Kindes auf dem Fahrradkindersitz mit einem Getränk während der Fahrt einfacher ist.

Zumindest eine dieser Aufgaben wird durch einen Kindersitz der eingangs genannten Art gelöst, wobei die Mittelkonsole einen Getränkehalter aufweist.

Der in der Mittelkonsole angeordnete Getränkehalter ist während der Fahrt für ein in der Sitzschale sitzendes Kind zugänglich, sodass sich das Kind während der Fahrt selbst ein Getränk aus dem Getränkehalter nehmen kann. Der Fahrer des Fahrrads muss das Getränk dem Kind nicht reichen und die Fahrt muss zur Versorgung des Kindes mit einem Getränk nicht unterbrochen werden. Von dem Getränkehalter gehaltene Trinkgefäße können während der Fahrt nicht verloren gehen.

Es versteht sich, dass ein "Getränkehalter" im Sinne der vorliegenden Erfindung dafür geeignet ist, ein Trinkgefäß zu halten. Der Begriff "Trinkgefäß" umfasst im Sinne der vorliegenden Erfindung insbesondere Flaschen, Becher und Trinkpäckchen.

In einer Ausführungsform weist der Getränkehalter eine Vertiefung oder eine Aussparung in der Mittelkonsole des Fahrradkindersitzes auf. In die Vertiefung oder Aussparung ist zumindest abschnittsweise ein Trinkgefäß einbringbar, sodass das Trinkgefäß in die Vertiefung oder Aussparung des Getränkehalters gestellt werden kann. Die Vertiefung oder Aussparung verhindert, dass das Trinkgefäß umfallen und der Inhalt des Trinkgefäßes auslaufen kann, sollte die Öffnung des Trinkgefäßes unverschlossen sein.

In einer weiteren Ausführungsform ist der Fahrradkindersitz spiegelsymmetrisch zu einer gedachten Symmetrieebene ausgestaltet. Vorzugsweise verläuft Symmetrieebene durch die Sitzschale und die Mittelkonsole. Die gedachte Symmetrieebene unterteilt den Fahrradkindersitz in zwei Hälften, wobei jede Hälfte eine der Fußstützen umfasst. Ist der Fahrradkindersitz an einem Fahrrad befestigt, liegt die Längsachse des Fahrradrahmens vorzugsweise in der Symmetrieebene des Fahrradkindersitzes. Der Fahrradkindersitz ist mittig über dem Hinterrad oder dem Vorderrad angeordnet. Die Spiegelsymmetrie des Fahrradkindersitzes erfordert, dass der Getränkehalter ebenfalls spiegelsymmetrisch zu der Symmetrieebene ausgestaltet ist. Eine gedachte, den Getränkehalter in zwei Hälften unterteilende Ebene liegt in der Symmetrieebene des Fahrradkindersitzes. Liegt die Längsachse des Fahrradrahmens in der Symmetrieebene des Fahrradkindersitzes ist die Mittelkonsole mittig über dem Hinterrad oder dem Vorderrad des Fahrrads angeordnet, sodass der Getränkehalter ebenfalls über dem Hinterrad bzw. dem Vorderrad angeordnet ist. Durch die Spiegelsymmetrie ist der Getränkehalter in einer Draufsicht von oben auf die Sitzschale mittig zwischen den Fußstützen in der Mittelkonsole angeordnet. Ein in der Sitzschale sitzendes Kind kann mit dem linken oder rechten Arm gleichermaßen nach dem Getränkehalter greifen, sodass der Getränkehalter für in der Sitzschale sitzende Linkshänder oder Rechtshänder zugänglich ist.

Damit ein in dem Getränkehalter angeordnetes Trinkgefäß nicht verloren geht, weist der Getränkehalter in einer Ausführungsform Mittel zum lösbaren Fixieren eines Trinkgefäßes in oder an dem Getränkehalter auf, wobei das Mittel zum lösbaren Fixieren vorzugsweise einen verschwenkbaren Bügel oder ein Federelement aufweist. Ist in dem Getränkehalter ein Trinkgefäß angeordnet, kann der verschwenkbare Bügel über oder um das Trinkgefäß geschwenkt werden, um so das Trinkgefäß in dem Getränkehalter zu fixieren. Weist das Mittel zum lösbaren Fixieren ein Federelement auf, dient das Federelement dazu das Trinkgefäß in dem Getränkehalter einzuspannen oder festzuklemmen.

In einer Ausführungsform sind die Mittelkonsole und der Getränkehalter einstückig, vorzugsweise aus einem einzigen Material, gefertigt. Auf diese Weise können der Getränkehalter und die Mittelkonsole in einem einzigen Produktionsschritt, beispielsweise durch Spritzgießen, hergestellt werden. In einer weiteren Ausführungsform ist der Getränkehalter zweiteilig oder aus mehreren Teilen ausgeführt. Beispielsweise kann der Getränkehalter eine in die Mittelkonsole eingelassene Vertiefung oder Aussparung aufweisen, in die eine Aufnahme für ein Trinkgefäß und/oder Mittel zum lösbaren Fixieren eines Trinkgefäßes einsetzbar sind. Vorzugsweise ist der Getränkehalter aus einem elastischen Kunststoff gefertigt oder weist einen elastischen den Öffnungsquerschnitt der Vertiefung oder Aussparung bilden Rand auf. Vorzugsweise sind das Trinkgefäß und der Getränkehalter und/oder der Öffnungsquerschnitt der Vertiefung oder Ausnehmung derart aufeinander angepasst, dass der elastische Kunststoff oder elastische Rand der Vertiefung oder Aussparung das in dem Getränkehalter angeordnete Trinkgefäß eingeklemmt. In einer Ausführungsform sind die Mittelkonsole und der Getränkehalter aus einem elastischen Kunststoff und/oder der elastische Rand einstückig hergestellt.

In einer Ausführungsform weist die Sitzschale eine Rückenlehne und zwei Armlehnen auf, wobei die Armlehnen auf der Rückseite der Rückenlehne über eine Materialverstärkung miteinander und mit der Rückenlehne verbunden sind. Die Armlehnen sind um die Rückenlehne der Sitzschale herumgeführt und stabilisieren so die Sitzschale. Die durch die Armlehnen verstärkte Rückenlehne hilft Stöße aufzunehmen und erhöht so die Sicherheit des Fahrradkindersitzes.

Die vorliegende Erfindung betrifft zudem ein Set mit einem erfindungsgemäßen Fahrradkindersitz und einem Trinkgefäß, wobei das Trinkgefäß mit dem Getränkehalter des Fahrradkindersitzes in Eingriff bringbar ist. Die Außenmaße des Trinkgefäßes und die Innenmaße des Getränkehalters der Mittelkonsole sind derart aufeinander abgestimmt, dass das Trinkgefäß von dem Getränkehalter aufgenommen oder von diesem gehalten werden kann.

In einer Ausführungsform, in der der Getränkehalter eine Vertiefung oder Ausnehmung in der Mittelkonsole des Fahrradkindersitzes aufweist, sind das Trinkgefäß und die Vertiefung oder die Ausnehmung derart komplementär zueinander ausgestaltet, dass das Trinkgefäß abschnittsweise passgenau in die Vertiefung oder Ausnehmung einsetzbar ist. Die passgenaue Einsetzbarkeit bewirkt, dass das Trinkgefäß sicher in dem Getränkehalter gehalten ist und insbesondere in dem Getränkehalter nicht umkippen kann.

In einer Ausführungsform weist der Getränkehalter Mittel zum lösbaren Fixieren des Trinkgefäßes in dem Getränkehalter auf, wobei vorzugsweise das Mittel zum lösbaren Fixieren des Trinkgefäßes in dem Getränkehalter ein über das in dem Getränkehalter angeordnete Trinkgefäße verschwenkbarer Bügel oder ein das in dem Getränkehalter angeordnete Trinkgefäß einspannende Federelement ist. Das Trinkgefäß und der Getränkehalter sind derart aufeinander abgestimmt, dass die Mittel zum lösbaren Fixieren des Trinkgefäßes mit dem Trinkgefäß in Eingriff bringbar sind, wenn das Trinkgefäß in dem Getränkehalter angeordnet oder von dem Getränkehalter gehalten wird. Weist das Mittel zum lösbaren Fixieren einen verschwenkaren Bügel auf, ist dieser über das Trinkgefäß oder um das Trinkgefäß verschwenkbar, wenn das Trinkgefäß in dem Getränkehalter angeordnet oder von dem Getränkehalter gehalten wird. Ein über das Trinkgefäß und/oder um das Trinkgefäß verschwenkter Bügel verhindert, dass das Trinkgefäß aus dem Getränkehalter herausfallen kann. Weist das Mittel zum lösbaren Fixieren ein Federelement auf, ist das Trinkgefäß und der Getränkehalter derart aufeinander abgestimmt, dass das Federelement das Trinkgefäß festklemmt oder einspannt, wenn das Trinkgefäß in dem Getränkehalter angeordnet oder von dem Getränkehalter gehalten wird.

In einer Ausführungsform bilden das Trinkgefäß und der Getränkehalter zusammen einen Bajonettverschluss, mit dem das Trinkgefäß in dem Getränkehalter lösbar fixierbar ist. Das Trinkgefäß und der Getränkehalter weisen eine Nut und einen in die Nut eingreifenden Vorsprung auf, wobei das Trinkgefäß die Nut oder den in die Nut eingreifenden Vorsprung und der Getränkehalter die entsprechend andere Komponente, d.h. den in die Nut eingreifenden Vorsprung oder die Nut, aufweisen kann. Das Trinkgefäß und der Getränkehalter sind derart aufeinander abgestimmt, dass bei einem Einsetzen des Trinkgefäßes in den Getränkehalter der Vorsprung in die Nut eingreift und mit der Einsetzbewegung in der Nut gleiten kann. Durch ein Verdrehen des Trinkgefäßes relativ zu dem Getränkehalter wird das Trinkgefäß in dem Getränkehalter durch den in die Nut eingreifenden Vorsprung nach Art eines Bajonettverschlusses fixiert.

Damit das Trinkgefäß beim Herausnehmen oder Lösen von dem Getränkehalter bzw. beim Einsetzen nicht durch eine Unachtsamkeit verloren geht, ist in einer Ausführungsform vorgesehen, dass das Trinkgefäß und der Fahrradkindersitz, vorzugsweise der Getränkehalter, jeweils Mittel zum lösbaren Anbringen eines Unverlierbarkeitsmittels, vorzugsweise einer Kette, einer Schnur, eines Seils, oder eines Bands, aufweisen, sodass das Trinkgefäß unverlierbar mit dem Fahrradkindersitz, vorzugsweise dem Getränkehalter, verbindbar ist. Beispielsweise könne das Trinkgefäß und der Fahrersitz, vorzugsweise der Getränkehalter, jeweils eine Öse zum Anbringen einer Kette, einer Schnur oder eines Bands aufweisen, sodass das Trinkgefäß und der Fahrersitz durch eine an den Ösen befestigte Kette, Schnur oder ein Band miteinander verbindbar sind. Sind das Trinkgefäß und der Fahrersitz, vorzugsweise der Getränkehalter, durch eine Kette, Schnur oder Band miteinander verbunden, kann das Trinkgefäß nicht verloren gehen.

Weitere Vorteile, Merkmale und Anwendungsmöglichkeiten der vorliegenden Erfindung werden anhand der vorliegenden Beschreibung einer Ausführungsform und der dazugehörigen Figuren deutlich, wobei gleiche Bezugszeichen auf gleiche Elemente verweisen. Es zeigen:
- Figur 1: eine Ausführungsform eines erfindungsgemäßen Sets in einer Draufsicht auf die Vorderseite des Fahrradkindersitzes,
- Figur 2: einen perspektivischen Ausschnitt des Sets gemäß Figur 1 von schräg vorne,
- Figur 3: eine Seitenansicht des Sets aus Figur 1,
- Figur 4: einen perspektivischen Ausschnitt des Sets gemäß Figur 1 mit einem getrennt von dem Getränkehalter dargestellten Trinkgefäß von schräg vorne, und
- Figur 5: eine Draufsicht auf die Rückseite des Fahrradkindersitzes aus Figur 1.

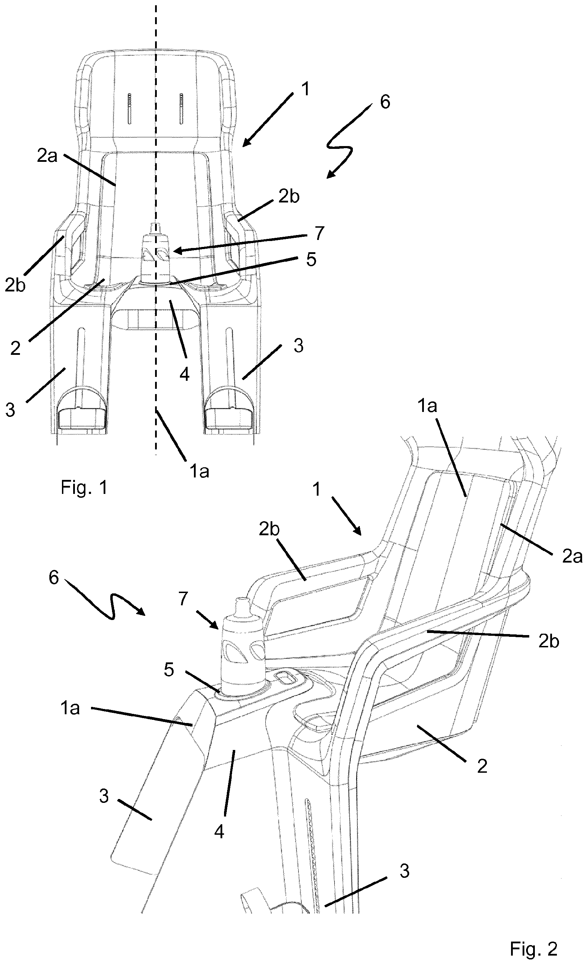

Die Figuren 1 bis 5 zeigen eine Ausführungsform eines erfindungsgemäßen Sets 6 mit einem Fahrradkindersitz 1 und einem Trinkgefäß 7. Es versteht sich, dass der in den Figuren 1 bis 5 im Set 6 dargestellte Fahrradkindersitz 1 einer erfindungsgemäßen Ausführungsform eines Fahrradkindersitzes 1 entspricht. Lediglich zur Vereinfachung werden die Ausführungsform des Sets und die Ausführungsform des Fahrradkindersitzes 1 nachfolgend zusammen beschrieben.

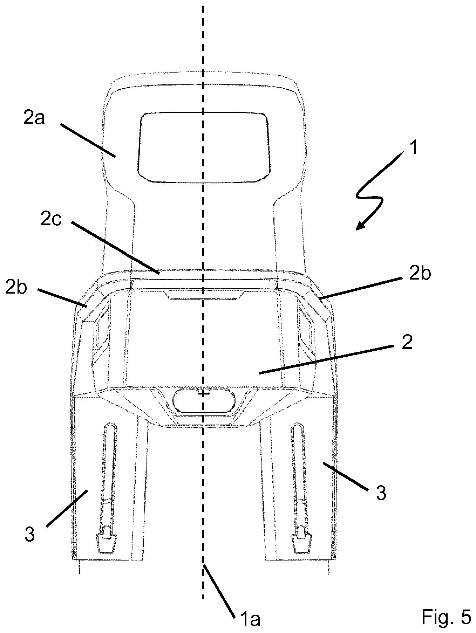

Der Fahrradkindersitz 1 ist für eine Gepäckträger- oder Rahmenmontage vorgesehen und weist eine Sitzschale 2 mit einer Rückenlehne 2a und zwei Armlehnen 2b auf. Die Armlehnen 2b sind, wie in der Figur 5 erkennbar, auf der Rückseite der Rückenlehne 2a miteinander und mit der Rückenlehne 2a über eine Materialverstärkung 2c verbunden.

Weiter weist der Fahrradkindersitz 1 zwei Fußstützen 3 auf, die über eine Mittelkonsole 4 miteinander und mit der Sitzschale 2 verbunden sind. Die Mittelkonsole 4 weist einen Getränkehalter 5 mit einer Vertiefung 5a auf, wobei die Mittelkonsole 4 und der Getränkehalter 5 einstückig miteinander verbunden sind.

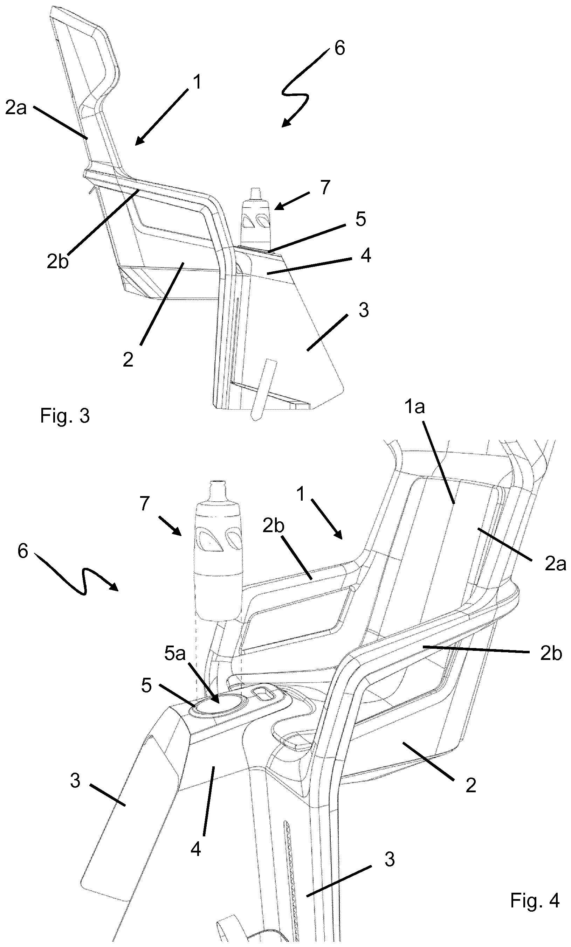

In die Vertiefung 5a ist ein Trinkgefäß 7, hier in Form einer Trinkflasche, einbringbar, wie es in den Figuren 1 bis 3 dargestellt ist. Das Trinkgefäß 7 und der Getränkehalter 5 sind derart komplementär zueinander ausgestaltet, dass das Trinkgefäß 7 abschnittsweise passgenau in die Vertiefung 5a des Getränkehalters 5 einsetzbar ist. Durch die passgenaue Ausgestaltung von Trinkgefäß 7 und Getränkehalter 5 wird das Trinkgefäß 7 sicher von dem Getränkehalter 5 gehalten. Die abschnittsweise komplementäre Ausgestaltung von Trinkgefäß 7 und Getränkehalter 5 ist in der Figur 4 angedeutet.

Der Fahrradkindersitz 1 ist spiegelsymmetrisch zu einer Symmetrieebene 1a ausgestaltet. Wie insbesondere in den Figuren 1 und 5 erkennbar, verläuft die Symmetrieebene mittig durch die Sitzschale 2 und die Mittelkonsole 4. Die gedachte Symmetrieebene 1a unterteilt den Fahrradkindersitz 1 in zwei Hälften, wobei in jeder der zwei Hälften eine der Fußstützen 3 angeordnet ist.

Der in der Mittelkonsole 4 eingebrachte Getränkehalter 5 ist ebenfalls spiegelsymmetrisch zu der Symmetrieebene 1a ausgestaltet. Wird der Fahrradkindersitz 1 auf einem Gepäckträger eines Fahrrads angeordnet (nicht dargestellt), liegt die Längsachse des Fahrradrahmens vorzugsweise in der Symmetrieebene des Fahrradkindersitzes 1, sodass der Fahrradkindersitz 1 und insbesondere der Getränkehalter 5 mittig über dem Hinterrad angeordnet ist. Ein auf dem Fahrradkindersitz 1 sitzendes Kind kann mit beiden Händen den Getränkehalter 5 erreichen.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarerer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschreiben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste:

- 1: Fahrradkindersitz
- 1a: Symmetrieebene
- 2: Sitzschale
- 2a: Rückenlehne
- 2b: Armlehnen
- 2c: Materialverstärkung
- 3: Fußstützen
- 4: Mittelkonsole
- 5: Getränkehalter
- 5a: Vertiefung
- 6: Set mit Fahrradkindersitz und Trinkgefäß 7
- 7: Trinkgefäß

## Patentansprüche

1. Fahrradkindersitz (1) für eine Gepäckträger- oder Rahmenmontage mit einer Sitzschale (2), zwei Fußstützen (3) und mit einer die zwei Fußstützen (3) und die Sitzschale (2) verbindenden Mittelkonsole (4), **dadurch gekennzeichnet, dass**
die Mittelkonsole (4) einen Getränkehalter (5) aufweist.

2. Fahrradkindersitz (1) nach Anspruch 1, **dadurch gekennzeichnet, dass** der Getränkehalter (5) eine Vertiefung (5a) oder Aussparung in der Mittelkonsole (4) aufweist.

3. Fahrradkindersitz (1) nach Anspruch 1 oder 2, **dadurch gekennzeichnet, dass** der Fahrradkindersitz (1) spiegelsymmetrisch zu einer Symmetrieebene (1a) ausgestaltet ist.

4. Fahrradkindersitz (1) nach einem der Ansprüche 1 bis 3, **dadurch gekennzeichnet, dass** der Getränkehalter (5) Mittel zum lösbaren Fixieren eines Trinkgefäßes (7) in oder an dem Getränkehalter (5) aufweist, wobei das Mittel zum lösbaren Fixieren vorzugsweise einen verschwenkbaren Bügel oder ein Federelement aufweist.

5. Fahrradkindersitz (1) nach einem der Ansprüche 1 bis 4, **dadurch gekennzeichnet, dass** die Mittelkonsole (4) und der Getränkehalter (5) einstückig, vorzugsweise aus einem einzigen Material, gefertigt sind.

6. Fahrradkindersitz (1) nach einem der Ansprüche 1 bis 5, **dadurch gekennzeichnet, dass** die Sitzschale (2) eine Rückenlehne (2a) und zwei Armlehnen (2b) aufweist, wobei die Armlehnen (2b) auf der Rückseite der Rückenlehne (2a) über eine Materialverstärkung (2c) miteinander und mit der Rückenlehne (2a) verbunden sind.

7. Set (6) mit einem Fahrradkindersitz (1) nach einem der Ansprüche 1 bis 6 und einem Trinkgefäß (7), **dadurch gekennzeichnet, dass** das Trinkgefäß (7) mit dem Getränkehalter (5) in Eingriff bringbar ist.

8. Set (6) nach Anspruch 7, **dadurch gekennzeichnet, dass** der Getränkehalter (5) eine Vertiefung (5a) oder Ausnehmung in der Mittelkonsole (4) des Fahrradkindersitzes (1) aufweist, wobei das Trinkgefäß (7) und die Vertiefung (5a) oder die Ausnehmung derart komplementär zueinander ausgestaltet sind, dass das Trinkgefäß (7) abschnittsweise passgenau in die Vertiefung (5a) oder Ausnehmung einsetzbar ist.

9. Set (6) nach Anspruch 7 oder 8, **dadurch gekennzeichnet, dass** der Getränkehalter (5) Mittel zum lösbaren Fixieren des Trinkgefäßes (7) in dem Getränkehalter (5) aufweist, wobei vorzugsweise das Mittel zum lösbaren Fixieren des Trinkgefäßes (7) in dem Getränkehalter (5) ein über das in dem Getränkehalter (5) angeordnete Trinkgefäß (7) verschwenkbarer Bügel oder ein das in dem Getränkehalter (5) angeordnete Trinkgefäß (7) einspannende Federelement ist.

10. Set (6) nach einem der Ansprüche 7 bis 9, **dadurch gekennzeichnet, dass** das Trinkgefäß (7) und der Getränkehalter (5) zusammen einen Bajonettverschluss bilden, mit dem das Trinkgefäß (7) in dem Getränkehalter (5) lösbar fixierbar ist.

11. Set (6) nach einem der Ansprüche 7 bis 10, **dadurch gekennzeichnet, dass** das Trinkgefäß (7) und der Fahrradkindersitz (1), vorzugsweise der Getränkehalter (5), jeweils Mittel zum lösbaren Anbringen eines Unverlierbarkeitsmittel, vorzugsweise einer Kette, einer Schnur, eines Seil, oder eines Bands, aufweisen, sodass das Trinkgefäß (7) unverlierbar mit dem Fahrradkindersitz (1), vorzugsweise dem Getränkehalter (5), verbindbar ist.

## Claims

1. A child's bicycle seat (1) for mounting on a carrier or frame, having a seat shell (2), two foot rests (3) and a central console (4) which connects the two foot rests (3) and the seat shell (2), **characterized in that** the central console (4) is provided with a drink holder (5).

2. The child's bicycle seat (1) according to claim 1, **characterized in that** the drink holder (5) is provided with a depression (5a) or recess in the central console (4).

3. The child's bicycle seat (1) according to claim 1 or claim 2, **characterized in that** the child's bicycle seat (1) is configured so as to be mirror symmetrical about a plane of symmetry (1a).

4. The child's bicycle seat (1) according to one of claims 1 to 3, **characterized in that** the drink holder (5) comprises means for releasably fixing a drinking vessel (7) in or on the drink holder (5), wherein the means for releasably fixing is preferably provided with a pivotable bracket or a spring element.

5. The child's bicycle seat (1) according to one of claims 1 to 4, **characterized in that** the central console (4) and the drink holder (5) are produced as one piece from a single material.

6. The child's bicycle seat (1) according to one of claims 1 to 5, **characterized in that** the seat shell (2) is provided with a back rest (2a) and two arm rests (2b), wherein the arm rests (2b) are connected together on the rear side of the back rest (2a) and connected to the back rest (2a) by means of a material reinforcement (2c).

7. A set (6) having a child's bicycle seat (1) according to one of claims 1 to 6 and a drinking vessel (7), **characterized in that** the drinking vessel (7) can be brought into engagement with the drink holder (5).

8. The set (6) according to claim 7, **characterized in that** the drink holder (5) is provided with a depression (5a) or recess in the central console (4) of the child's bicycle seat (1), wherein the configurations of the drinking vessel (7) and the depression (5a) or recess are such that they are complementary to each other, such that the sections of the drinking vessel (7) in part fits exactly into the depression (5a) or recess.

9. The set (6) according to claim 7 or claim 8, **characterized in that** the drink holder (5) is provided with means for releasably fixing the drinking vessel (7) in the drink holder (5), wherein preferably, the means for releasably fixing the drinking vessel (7) in the drink holder (5) is a pivotable bracket disposed over the drinking vessel (7) in the drink holder (5) or a spring element which clamps the drinking vessel (7) disposed in the drink holder (5).

10. The set (6) according to one of claims 7 to 9, **characterized in that** the drinking vessel (7) and the drink holder (5) together form a bayonet closure with which the drinking vessel (7) can be releasably fixed in the drink holder (5).

11. The set (6) according to one of claims 7 to 10, **characterized in that** the drinking vessel (7) and the child's bicycle seat (1), preferably the drink holder (5), are respectively provided with means for releasably attaching a capturing means, preferably a chain, a lanyard, a rope, or a strap, so that the drinking vessel (7) can be undetachably connected to the child's bicycle seat (1), preferably to the drink holder (5).

## Revendications

1. Siège enfant de bicyclette (1) à monter sur un porte-bagages ou un cadre, comprenant une coque de siège (2), deux repose-pieds (3) et une console centrale (4) reliant les deux repose-pieds (3) et la coque de siège (2), **caractérisé en ce que** la console centrale (4) comporte un support de boisson (5).

2. Siège enfant de bicyclette (1) selon la revendication 1, **caractérisé en ce que** le support de boisson (5) présente une cavité (5a) ou un évidement dans la console centrale (4).

3. Siège enfant de bicyclette (1) selon la revendication 1 ou 2, **caractérisé en ce que** le siège enfant de bicyclette (1) est conçu avec une symétrie de miroir par rapport à un plan de symétrie (1a).

4. Siège enfant de bicyclette (1) selon l'une des revendications 1 à 3, **caractérisé en ce que** le support de boisson (5) présente un moyen de fixation amovible d'un récipient de boisson (7) dans ou sur le support de boisson (5), le moyen de fixation amovible présentant de préférence un étrier pouvant pivoter ou un élément à ressort.

5. Siège enfant de bicyclette (1) selon l'une des revendications 1 à 4, **caractérisé en ce que** la console centrale (4) et le support de boisson (5) sont formés d'un seul tenant, de préférence en un seul matériau.

6. Siège enfant de bicyclette (1) selon l'une des revendications 1 à 5, **caractérisé en ce que** la coque de siège (2) présente un dossier (2a) et deux accoudoirs (2b), les accoudoirs (2b) étant reliés entre eux et au dossier (2a) via un renfort de matériau (2c) à l'arrière du dossier (2a).

7. Ensemble (6) comportant un siège enfant de bicyclette (1) selon l'une quelconque des revendications 1 à 6 et un récipient de boisson (7), **caractérisé en ce que** le récipient de boisson (7) peut être mis en prise avec le support de boisson (5).

8. Ensemble (6) selon la revendication 7, **caractérisé en ce que** le support de boisson (5) présente une cavité (5a) ou un évidement dans la console centrale (4) du siège enfant de bicyclette (1), dans lequel le récipient de boisson (7) et la cavité (5a) ou l'évidement sont conçus complémentaires entre eux, de telle sorte que le récipient de boisson (7) peut être inséré partiellement de manière précise dans la cavité (5a) ou dans l'évidement.

9. Ensemble (6) selon la revendication 7 ou 8, **caractérisé en ce que** le support de boisson (5) comprend un moyen de fixation amovible du récipient de boisson (7) dans le support de boisson (5), le moyen de fixation amovible du récipient de boisson (7) dans le support de boisson (5) étant de préférence un étrier pouvant pivoter par l'intermédiaire du récipient de boisson (7) agencé dans le support de boisson (5) ou un élément à ressort serrant le récipient de boisson (7) agencé dans le support de boisson (5).

10. Ensemble (6) selon l'une des revendications 7 à 9, **caractérisé en ce que** le récipient de boisson (7) et le support de boisson (5) forment ensemble une fermeture à baïonnette avec laquelle le récipient de boisson (7) peut être fixé de manière amovible dans le support de boisson (5).

11. Ensemble (6) selon l'une des revendications 7 à 10, **caractérisé en ce que** le récipient de boisson (7) et le siège enfant de bicyclette (1), de préférence le support de boisson (5), comprennent chacun un moyen destiné à fixer de manière amovible un moyen d'assujettissement, de préférence une chaîne, une ficelle, une corde ou une bande, de sorte que le récipient de boisson (7) peut être relié de manière assujettie au siège enfant de bicyclette (1), de préférence au support de boisson (5).
